# EUROPÄISCHE PATENTANMELDUNG

(11) **EP 2 680 334 A1**
(43) Veröffentlichungstag der Anmeldung: **01.01.2014**
(21) Anmeldenummer: 12174155.7
(22) Anmeldetag: 28.06.2012
(51) Int. Cl.: H01L 41/053, H02N 2/00, H02N 2/10

(54) **Piezo-Antrieb mit drehgelenkgelagertem Piezooszillator**

(71) Anmelder: Leica Geosystems AG, 9435 Heerbrugg (CH)
(72) Erfinder: Mueller, Josef, 9413 Oberegg (CH)
(74) Vertreter: Harmann, Bernd-Günther

(57) **Zusammenfassung**

Die Erfindung betrifft einen Piezo-Antrieb zur Verwendung in einem Messgerät (11), insbesondere einem geodätischen oder industriellen Vermessungsgerät, mit wenigstens einem piezoelektrischen Antriebselement (10) und einer Laufflächenkomponente (3) mit einer Lauffläche (13), wobei das piezoelektrische Antriebselement (10) wenigstens einen Piezooszillator mit einem Friktionselement (2) zur Kontaktierung der Lauffläche (13), eine Aufnahme (9) und eine Aufhängung zur Lagerung des Piezooszillators an der Aufnahme (9) mit mindestens einem eine Rückstellkraft bereitstellenden Anpresselement aufweist, dadurch gekennzeichnet, dass die Aufnahme (9) eine Gelenkeinheit aufweist, die dazu ausgestaltet ist, eine Dreh- oder Schwenkbewegung des Piezooszillators zu ermöglichen, sowie ein Messgerät (11), bei welchem wenigstens eine erste Komponente relativ zu einer weiteren Komponente vermittels eines solchen Piezo-Antriebes ausrichtbar ist.

## Beschreibung

Die vorliegende Erfindung betrifft einen Piezo-Antrieb, insbesondere zur Verwendung in geodätischen oder Koordinatenmessgeräten, mit einem Piezooszillator, der mittels eines Drehgelenks und mindestens eines Federelementes statisch bestimmt in einem Gehäuse eines Piezomotors aufgehängt ist, sowie ein Messgerät mit einem solchen Piezo-Antrieb und ein Antriebsverfahren.

In vielen präzisen Geräten, wie zum Beispiel geodätischen Messgeräten, ist die Bewegung von Komponenten oder des gesamten Gerätes erforderlich. Dabei muss die Bewegung präzise und bei dynamischen Anwendungen auch hinreichend schnell erfolgen, wobei meist hohe Anfahr- bzw. Wiederholgenauigkeiten Voraussetzung sind. Zudem erfordert die Feldtauglichkeit von Geräten grundsätzlich Robustheit des Antriebs, einen geringen Stromverbrauch sowie einen zuverlässigen Betrieb innerhalb eines weiten Temperaturbereiches.

Beispiele für solche Messgeräte sind Theodoliten oder Tachymeter, welche - auch zusammen mit integrierten automatischen Zielerfassungs- und Zielverfolgungseinrichtungen - für vielfältige Vermessungsaufgaben zum Einsatz kommen, wobei sowohl eine Datengewinnung als auch eine reine Überprüfung, wie zum Beispiel in der Bauwerksüberwachung, in Frage kommen. Andere Messgeräte sind beispielsweise Scannersysteme, die im abtastenden Verfahren Topographien von Oberflächen als dreidimensionale Punktwolken aufnehmen oder Messmaschinen, zum Beispiel Koordinatenmessmaschinen zur hochgenauen kontaktierenden oder berührungslosen Oberflächenvermessung.

In bisher aus dem Stand der Technik bekannten Lösungen kommen für diese Zwecke Piezosysteme zum Einsatz, die den Antrieb zum Schwenken oder Verschieben der Komponenten bereitstellen. Solche Mikromotoren weisen räumlich wirkende Piezoschwinger mit Kontaktelementen als Antriebselemente auf, die auf eine entsprechend gestaltete Lauffläche oder Reibschiene wirken und somit in Abstimmung von Piezoschwinger und abgestimmter Lauffläche eine optimierte Bewegung erlauben. Die räumlich schwingende bzw. oszillierende Bewegung wird durch die abgestimmte Anordnung und Verschaltung von piezoelektrischen Materialen bewirkt, deren auf die Lauffläche wirkendes Kontaktelement durch eine geeignete Ansteuerung zu einer vortreibenden, zum Beispiel ellipsenförmigen Bewegung veranlasst wird.

In einem Antrieb für Messgeräte können solche schwingend betriebenen piezoelektrischen Systeme als Mikromotoren für verschiedenste Bewegungen verwendet werden, wenn eine entsprechend auf die Erfordernisse des geodätischen Messgerätes abgestimmte Auslegung von Laufflächen vorhanden ist. Zumeist erfordern Messgeräte sowohl einen schnellen Bewegungsmodus mit hoher Geschwindigkeit als auch einen Modus zur hochgenauen Positionierung mit geringsten Geschwindigkeiten. Die Bewegung der Komponenten des Messgerätes erfordert sowohl hohe Positioniergenauigkeit, Geschwindigkeit als auch Beschleunigung, um die Messaufgaben mit der notwendigen Präzision durchzuführen. Die Anforderungen an den Antrieb müssen dabei - bedingt durch die Feldanwendung geodätischer Messinstrumente - auch in einem breiten Bereich von Umwelteinflüssen erfüllt werden.

Typische Aufgaben für die Antriebe in geodätischen Instrumenten sind automatisierte Zielerfassung und Zielverfolgung, die zur Vermessung des Ziels mit hoher Präzision und Dynamik durchgeführt werden müssen. Piezo-Antriebe sind besonders geeignet für diese Aufgaben, weil sie Bewegungen mit hoher Geschwindigkeit und hoher räumlicher Auflösung ausführen können. In geodätischen Messinstrumenten können Piezo-Antriebe vom rotatorischen Typ zum Einsatz kommen, bei denen ein schwingender Piezooszillator einen harten Ring antreibt. Dabei müssen die Anforderungen an den Piezo-Antrieb über den Umfang des Rings und über die Lebensdauer des Antriebs stets erfüllt werden.

Aus dem Stand der Technik sind Piezomotoren zum rotatorischen Antrieb hinlänglich bekannt. Solche Piezo-Antriebe sind beispielsweise in den Dokumenten EP 1 267 425, EP 1 619 468, EP 2 200 101 oder EP 2 237 338 beschrieben. Dabei ist jeweils eine Laufflächenkomponente mit einer anzutreibenden Achse fest verbunden. Bei drehenden Antriebskonfigurationen kommt als Laufflächenkomponente meist ein Ring aus einem harten Werkstoff zur Verwendung, so dass der Abrieb verringert wird. Allerdings muss zur Erzielung einer guten Vortriebswirkung gleichzeitig eine hohe Reibung bewirkt werden. Gängige Materialien sind hierbei Metalle mit einer Hartschicht oder Keramikbauteile. Der Ring wird durch die Schwingungen eines oder mehrerer Piezooszillatoren angetrieben.

Jeder dieser Piezooszillatoren besteht dabei aus einer piezokeramischen Platte, auf der ein keramisches Friktionselement befestigt ist. In der EP 2 200 101 wird der Piezooszillator mittels zweier - diesen an der dem Friktionselement gegenüberliegenden Seite kontaktierenden - Anpressfedern an eine Lauffläche des Rings gepresst. Bezogen zum Piezo-Antrieb sind die Anpressfedern in radialer Richtung angeordnet. In tangentialer Richtung wird der Piezooszillator mittels zweier seitlicher Federn gegen eine planare Fläche gedrückt. Diese planare Fläche bildet ein Gleitlager, das zur radialen Führung des Piezooszillators dient. Diese Führung des Gleitlagers ermöglicht es dem Piezooszillator, einem allfälligen Ringschlag zu folgen. In axialer Richtung wird der Piezooszillator mittels viskoelastischer Elemente gehalten. Der Piezooszillator wird durch die Anpressfedern und die seitlichen Federn an die Lauffläche des Ringes angepresst, wodurch während der Schwingung eine tangentiale Reibkraft zwischen der Lauffläche und dem Piezooszillator entsteht. Diese Reibkraft ist die Antriebskraft, die das Antriebsdrehmoment des Motors erzeugt. Variationen dieser Reibungskraft über dem Umfang des Rings verändern das Antriebsmoment des Motors und somit die Leistung des geodätischen Messinstruments in Bezug auf Beschleunigung, Geschwindigkeit und Positioniergenauigkeit. Über die Lebensdauer des Piezo-Antriebs auftretende Variationen der Reibungskraft, die insbesondere vom Abrieb des Friktionselements des Piezooszillators hervorgerufen werden können, verursachen in der Regel eine Reduktion des Antriebmoments des Piezo-Antriebs, was zu einer entsprechenden Reduktion der Leistung des Messinstrumentes führt.

Bei einer solchen aus dem Stand der Technik bekannten Konstruktion eines Piezo-Antriebs treten mindestens drei wesentliche Nachteile auf:
- eine statische Überbestimmtheit des Piezooszillators;
- eine Hysterese der Anpresskraft des Piezooszillators; und
- eine Unbestimmtheit der axialen Position des Piezooszillators.

Die statische Überbestimmtheit des Piezooszillators führt zu einem bistabilen Verhalten des Piezooszillators in der Gleitführung - abhängig vom Übergang von Haftreibung zu Gleitreibung in der Gleitführung. Die Gleitführung des Piezooszillators verhält sich in einem radialen Bereich wie ein Festkörpergelenk mit hoher Steifigkeit und in einem anderen radialen Bereich wie eine normale Gleitführung. Diese Unterschiede und insbesondere die hohe Steifigkeit im Bereich des Festkörpergelenk-Verhaltens der Gleitführung bewirken signifikante Variationen der Anpresskraft des Piezooszillators bzw. des Antriebmoments des Piezo-Antriebs. Diese Variation tritt sowohl bei jeder Umdrehung auf, als auch bei sich verändernden Umweltbedingungen. Das führt dazu, dass der Piezo-Antrieb sowohl starke Umlaufschwankungen, als auch starke Schwankungen in seiner Leistung über alle Umweltbedingungen aufweist.

Die Hysterese der Anpresskraft des Piezooszillators resultiert direkt aus dem oben erwähnten bistabilen Verhalten des Piezooszillators und bewirkt, dass sich die tatsächliche Anpresskraft des Piezo-Antriebs während einer Umdrehung und über die variierende Umweltbedingungen von der nominell berechneten Anpresskraft wesentlich unterscheidet. Eine weitere Folge der Hysterese der Anpresskraft sind asymmetrische Anpresskräfte der beiden Piezooszillatoren eines Piezo-Antriebs, was zu einer erhöhten Lagerbelastung der entsprechenden Achse führt.

Eine Aufgabe der vorliegenden Erfindung besteht darin, einen verbesserten Piezo-Antrieb, insbesondere für hochpräzise Geräte, wie beispielsweise geodätische Instrumente, bereitzustellen. Dabei ist es eine besondere Aufgabe der Erfindung, einen Piezo-Antrieb bereitzustellen, der die beschriebenen Nachteile der aus dem Stand der Technik bekannten Piezo-Antriebe umgeht und somit eine konstantere Leistung aufweist.

Eine weitere Aufgabe der Erfindung ist es, die Aufhängung des Piezooszillators in radialer und tangentialer Richtung statisch bestimmt zu gestalten.

Eine weitere Aufgabe der Erfindung ist es, eine flache Kennlinie der Anpresskraft des Piezooszillators zu erreichen und somit den Piezo-Antrieb unempfindlich von Ringschlag und Laufflächenverschleiss zu machen.

Eine weitere Aufgabe der Erfindung ist es, die Leistung des Piezo-Antriebs unabhängig vom Abrieb des Friktionselementes zu machen.

Eine weitere Aufgabe der Erfindung ist es, eine geringe Hysterese der Antriebskraft des Piezooszillators zu erreichen und somit den Piezo-Antrieb unabhängiger von Ringschlag und Umwelteinflüssen zu machen.

Mindestens eine dieser Aufgaben wird durch die Gegenstände des Anspruchs 1, des Anspruchs 11, des Anspruchs 15 oder der abhängigen Ansprüche gelöst.

Ein erfindungsgemässer Piezo-Antrieb verfügt über eine Laufflächenkomponente mit einer Lauffläche sowie über mindestens eine piezoelektrische Antriebseinheit, zum Beispiel einen Piezomotor, zum Antreiben der Laufflächenkomponente. Dabei weist die Antriebseinheit erfindungsgemäss eine modifizierte Halterung auf, bei der ein Piezooszillator mittels eines Drehgelenks mit einem Gehäuse oder einer anderen Aufnahme des Piezomotors verbunden ist.

Der Piezomotor hat ein Gehäuse und einen in dem Gehäuse angeordneten Piezooszillator, bestehend aus mindestens einer, vorzugsweise piezokeramischen, Platte - wobei auch andere Materialien als Keramik möglich sind - und einem Friktionselement, das fest mit der Platte verbunden ist. Der Piezooszillator ist im Gehäuse mittels einer Aufhängung statisch bestimmt gelagert.

Die Aufhängung umfasst eine Drehgelenkeinheit und mindestens ein eine Rückstellkraft bereitstellendes Anpresselement, vorzugsweise in Form eines Federelementes oder eines gleichartig wirkenden Anpresselementes. Die Aufhängung ist dabei rein funktional definiert, sowohl die Gelenkeinheit als auch das Anpresselement können ganz oder teilweise Teil der Aufnahme und/oder des Piezooszillators sein.

Das Drehgelenk ist seitlich zum Friktionselement des Piezooszillators angeordnet und ermöglicht eine Schwenkbewegung des Piezooszillators relativ zur Aufnahme und zur Lauffläche um eine Achse des Drehgelenks. Der Piezooszillator kann dabei in Relation zur Lauffläche wenigstens in einem Winkelbereich hin- und herschwenken, der - je nach Ausmass der auftretenden Schwingungen des Piezooszillators - für ein Antreiben der Laufflächenkomponente notwendig ist.

Der Piezooszillator wird durch das Anpresselement - oder auch mehrere, insbesondere gleichartig wirkende, Anpresselemente - mit dem Friktionselement gegen eine ringförmige Lauffläche angepresst. Das Anpresselement ist so dimensioniert, dass die Anpresskraft des Piezooszillators eine flache Kennlinie mit einer geringen Hysterese aufweist. Die geforderte Kennlinie und die statische Bestimmtheit werden durch eine geeignete Dimensionierung des Anpresselementes des Piezomotors erreicht.

Vorzugsweise weist der Piezooszillator mindestens ein Halteelement auf, in welches er montiert oder mit welchem er andersartig fest verbunden ist, insbesondere spielfrei. Der Piezooszillator ist dann zusammen mit dem optionalen Halteelement mittels des Drehgelenkes und mindestens eines Federelementes statisch bestimmt in der Aufnahme aufgehängt und wird durch das Feder- oder sonstige Anpresselement gegen eine ringförmige Lauffläche angepresst.

Das Drehgelenk als Teil der Aufhängung kann teilweise als integraler Teil des Piezooszillators, insbesondere des Halteelements, und/oder des Gehäuses ausgeführt werden. Das Drehgelenk kann in verschiedenen Varianten gestaltet werden, insbesondere als Gleitgelenk oder Festkörpergelenk.

Der so beschriebene Piezo-Antrieb wird in präzisen Positionierungsmechanismen verwendet, unter anderem auch in geodätischen und industriellen Vermessungsinstrumenten, wie Theodoliten oder Lasertracker. In geodätischen Instrumenten wird der Piezo-Antrieb zum Antreiben der Alhidade und des Teleskops des Instruments verwendet.

Ein erfindungsgemässes Antriebsverfahren zum Antreiben einer Achse mit einem Piezo-Antrieb weist auf:
- ein Kontaktieren einer Lauffläche einer Laufflächenkomponente der Achse durch ein Friktionselement eines Piezooszillators des Piezo-Antriebs,
- ein Übertragen von Bewegungsimpulsen vom Friktionselement auf die Laufflächenkomponente,
- ein Ausüben einer radial auf den Piezooszillator wirkenden Kraft zum Anpressen des Friktionselementes an die Lauffläche,
- ein Ausüben einer tangential auf den Piezooszillator wirkenden Kraft, und
- ein schwenkbares Lagern des Piezooszillators zum Erzeugen einer Beweglichkeit des Friktionselementes relativ zur Lauffläche, wobei die tangential auf den Piezooszillator wirkende Kraft im Lager einen Kraftschluss bewirkt.

Der erfindungsgemässe Piezo-Antrieb wird im Folgenden anhand von schematisch dargestellten Ausführungen beschrieben. Weitere Vorteile und Kennzeichen der Erfindung sind aus der folgenden Beschreibung von derzeit bevorzugten Ausführungsformen im Zusammenhang mit den anhängenden Figuren ersichtlich. In den Figuren zeigen schematisch:
- Fig. 1a-b: ein geodätisches Vermessungsgerät als beispielhaftes Anwendungsgebiet des erfindungsgemässen Piezo-Antriebs;
- Fig. 1c: eine Darstellung eines drehenden Antriebs durch piezoelektrische Mikromotoren;
- Fig. 2a: die Anpresskraft-Kennlinien eines gleitgeführten Piezooszillators und eines erfindungsgemässen Piezooszillators mit Drehgelenk;
- Fig. 2b-c: je einen vergrösserten Auszug aus Fig. 2a in der Umgebung des Arbeitspunktes des Piezooszillators;
- Fig. 3: eine erläuternde Darstellung zu den Begriffen Weg, Anpressdruck und Ringschlag;
- Fig. 4a-b: die Umlaufschwankungen der Geschwindigkeit eines gleitgeführten Piezooszillators und eines erfindungsgemässen Piezooszillators mit Drehgelenk;
- Fig. 5a-b: eine erste Ausführungsform eines Piezo-Antriebs, ausgestattet mit einem drehgelenkgelagerten Piezooszillator mit zwei Halteelementen und einem Drehgelenk in gleitender Ausführung;
- Fig. 6a-b: eine zweite Ausführungsform eines Piezo-Antriebs, ausgestattet mit einem drehgelenkgelagerten Piezooszillator mit einem Halteelement und einem Drehgelenk in gleitender Ausführung;
- Fig. 7: eine dritte Ausführungsform eines Piezo-Antriebs, ausgestattet mit einem drehgelenkgelagerten Piezooszillator mit einem Halteelement und einem Drehgelenk in Festkörpergelenk-Ausführung;
- Fig. 8: eine vierte Ausführungsform eines Piezo-Antriebs, ausgestattet mit einem drehgelenkgelagerten Piezooszillator mit einem Drehgelenk in Prismengelenk-Ausführung;
- Fig. 9: eine weitere Ausführungsform des Piezo-Antriebs mit nur einem einzigen Federelement in Form eines Anpress-Kraftschluss-Federelementes; und
- Fig. 10: eine weitere Ausführungsform des Piezo-Antriebs mit nur einem einzigen Federelement in Form eines Anpressfederelementes.

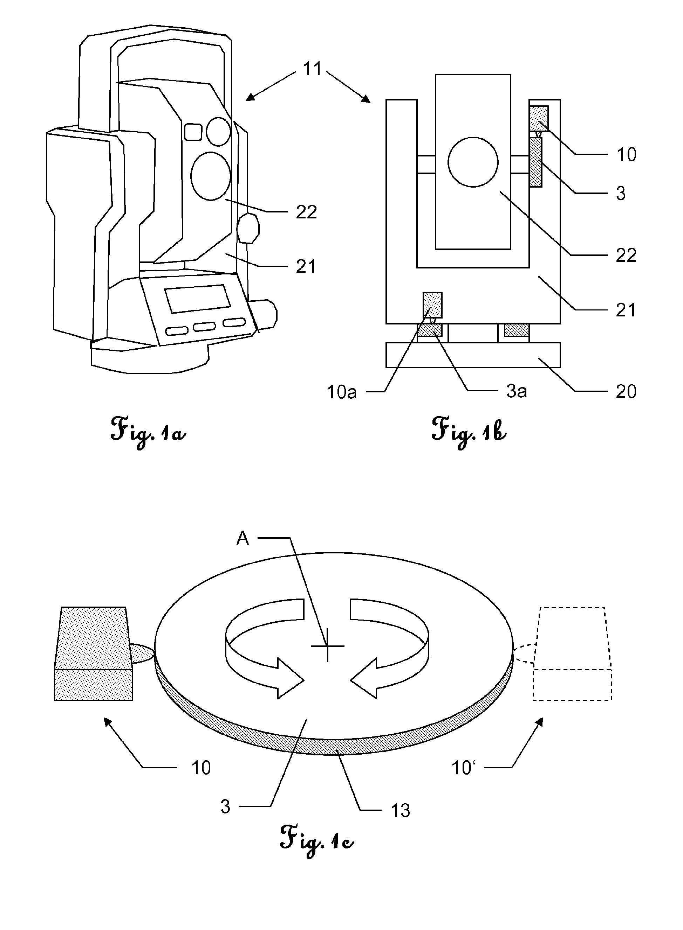

Die Figuren 1a und 1b zeigen in einer figürlichen und einer schematischen Darstellung einen Theodoliten als Beispiel für den Einsatz eines erfindungsgemässen Piezo-Antriebes.

In Figur 1a ist eine Totalstation als geodätisches Messgerät 11 mit einer Ausrichtkomponente 21 und einer Messkomponente 22 dargestellt. Die Messkomponente 22 weist ein Objektiv auf, über das ein Strahlgang zu einem zu vermessenden Ziel definiert wird. Die Ausrichtkomponente 21 kann gegenüber einer (hier nicht dargestellten) Basis um eine vertikale Stehachse geschwenkt werden. Durch die Lagerung der Messkomponente 22 in der Ausrichtkomponente 21 kann die Messkomponente 22 um eine horizontale Kippachse bewegt werden. Die Bewegbarkeit um Steh- und Kippachse erlaubt das Erfassen eines grossen Raumwinkelbereichs, der bei einer Auslegung mit einer durchschlagbaren Messkomponente 22 eine vollständige Erfassung des umgebenden Raumes erlaubt.

Für das gleiche Messgerät 11 erfolgt in Figur 1b eine schematische und vereinfachte Darstellung. Die Messkomponente 22 mit dem Objektiv ist durch eine Achse gegenüber der Ausrichtkomponente 21 drehbar gelagert. Die Achse als anzutreibende Komponente weist eine Laufflächenkomponente 3 mit gekrümmter Lauffläche auf, dem ein Piezo-Motor als piezoelektrisches Antriebselement 10 zugeordnet ist, wobei der Piezo-Motor die Laufflächenkomponente 3 radial, das heisst an ihrer Aussenfläche, kontaktiert und eine Drehung um die Kippachse bewirkt.

Die Emission von Strahlung zur Vermessung des Ziels kann über das Objektiv oder aber über einen zusätzlichen, zur optischen Achse des Objektivs parallelen Strahlgang erfolgen, der eine Laserstrahlung emittierende Entfernungsmesseinheit und einen zugeordneten Spiegel aufweist, so dass durch die Bewegung der Messkomponente 22 eine Abtastung der Umgebung erfolgen kann. Eine Drehung der Ausrichtkomponente 21 um die Stehachse erfolgt durch ein zweites piezoelektrisches Antriebselement 10a als Ausrichtmotor, der eine in der Basis 20 angeordnete zweite Laufflächenkomponente 3a axial bzw. stirnseitig kontaktiert. Durch diesen Ausrichtmotor kann die Ausrichtkomponente 21 gegenüber der Basis 20 verdreht werden, wobei die Anordnung als Endlostrieb wirkt. Durch das Zusammenwirken der beiden piezoelektrischen Antriebselemente 10,10a ist der Strahlgang um zwei Achsen beweg- und ausrichtbar und somit modifizierbar. Die axiale oder stirnseitige Kontaktierung bzw. die entsprechende Auslegung der Antriebskomponenten ist hierbei nicht auf die dargestellten Achsen beschränkt, sondern kann auch für die jeweils andere Achse oder andere Achsen zur Anwendung kommen. Die Laufflächenkomponenten 3,3a weisen insbesondere die Form einer runden Scheibe oder eines Ringes auf.

Figur 1c zeigt die schematische Darstellung eines Piezo-Antriebs mit einer anzutreibenden scheibenförmigen Laufflächenkomponente 3, die eine gekrümmte Lauffläche 13 aufweist, welche durch ein bewegungsübertragendes Kontaktelement eines ersten Piezomotors 10 und eines optionalen zweiten Piezomotors 10' kontaktiert wird. Die Lauffläche 13 als bewegungsaufnehmendes Element wandelt die Bewegung des Kontaktelementes in die gewünschte Bewegung um, in diesem Beispiel eine Drehung der Laufflächenkomponente 3 um eine Achse A. Die Bewegung wird hierbei durch eine Kombination von Resonanzen der piezokeramischen Elemente des Piezomotors 10 erzeugt, die eine oszillierende Bewegung des Kontaktelementes hervorrufen. Diese Bewegung wird durch Reibung auf die Lauffläche 13 und damit die anzutreibende Laufflächenkomponente 3 übertragen.

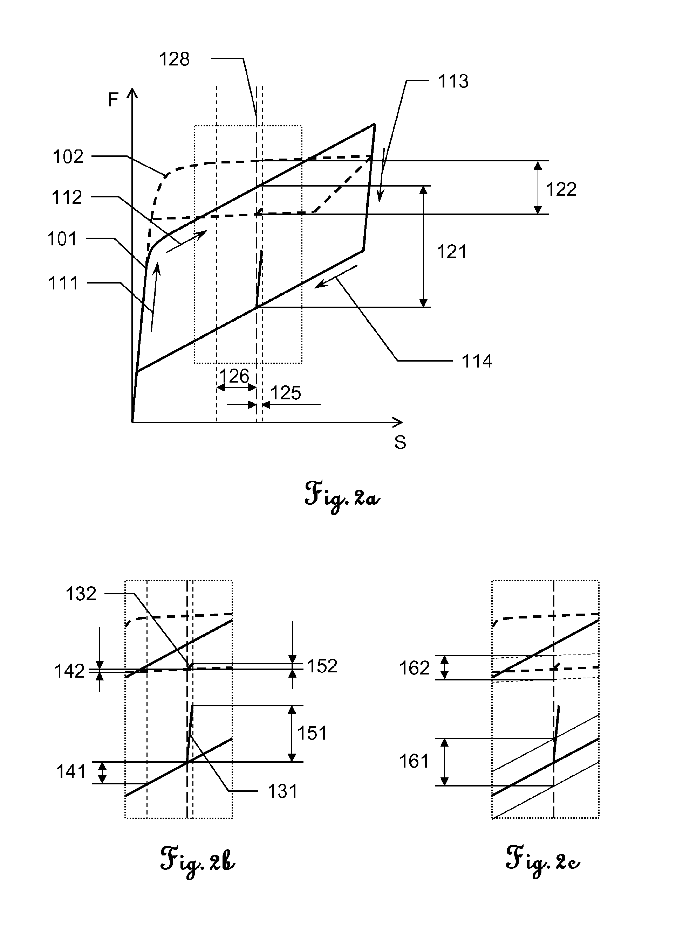

In den Figuren 2a-c werden in einem Kraft-Weg-Diagramm die Kennlinien 101,102 der Anpresskraft eines aus dem Stand der Technik bekannten gleitgelagerten Piezooszillators und eines erfindungsgemässen drehgelenkgelagerten Piezooszillators einander gegenübergestellt. Dabei bezeichnet F die Anpresskraft und S den Weg. Die Figuren 2b und 2c zeigen dabei einen Ausschnitt des Diagramms aus Figur 2a; dieser ist in Figur 2a mit gepunkteten Linien dargestellt.

Figur 2a zeigt die Kennlinie 101 (dargestellt als durchgezogene Linie) der Anpresskraft eines gleitgelagerten Piezooszillators im Vergleich zur Kennlinie 102 (dargestellt als gestrichelte Linie) der Anpresskraft eines erfindungsgemässen drehgelenkgelagerten Piezooszillators.

Bei der Montage des Piezo-Antriebs wird der Piezooszillator ausgelenkt, damit er den Ring umschliessen kann. Die Anpresskraft des Piezooszillators beschreibt bei diesem Vorgang die entsprechende Kennlinie in der Richtung der Pfeile, welche die vier Abschnitte 111-114 der Kennlinie darstellen. Das gilt sowohl für die gleitgelagerte als auch die drehgelenkgelagerte Konstruktionsvariante des Piezo-Antriebs. Der Verlauf der beiden Kennlinien 101,102 wird zunächst anhand der Gleitführungskennlinie 101 erläutert.

Der steile Anstieg der Kennlinie 101 im ersten Abschnitt 111 stellt den Bereich der elastischen Deformation der Komponenten dar: die Aufhängung des Piezooszillators verhält sich beim Auslenken wie ein Festkörpergelenk mit grosser Steifigkeit. Dabei steigt die Anpresskraft zunächst rasch an, bis am Übergang zur Gleitreibung die Haftreibung der Gleitführung überwunden wird, und der Piezooszillator im zweiten Abschnitt 112 zu gleiten beginnt. Der weniger steile Anstieg der Kennlinie 101 im zweiten Abschnitt 112 stellt den Bereich der Gleitreibung dar: der Piezooszillator gleitet in der Gleitführung und erreicht seine Endposition. Im dritten Abschnitt 113 wird der Piezooszillator durch die Federn des piezoelektrischen Antriebs zur Lauffläche hinbewegt, wobei sich die Aufhängung wie ein Festkörpergelenk verhält, ähnlich wie im ersten Abschnitt 111 der Kennlinie 101. Im vierten Abschnitt 114 gleitet der Piezooszillator auf der Gleitführung und erreicht seinen Arbeitspunkt 128 auf der Lauffläche. Somit wird auch seine Anpresskraft im Arbeitspunkt (dargestellt durch die senkrechte Linie 128) erreicht.

Der Verlauf der Kennlinie 102 ähnelt dem der Kennlinie 101, der Verlauf im ersten und dritten Abschnitt ist jedoch deutlich weniger steil. Der entscheidende Unterschied ist, dass das Festkörpergelenk-Verhalten eines erfindungsgemässen Systems mit Drehgelenk weit weniger stark ausgeprägt ist.

Die Hysterese 121,122 der Anpresskraft im Arbeitspunkt 128 ist für beide Kennlinien 101,102 dargestellt. Die Hysterese 121 der Gleitführung ist vergleichsweise gross, weil sich der Übergang von Haftreibung zu Gleitreibung in der Gleitführung auf die Anpresskraft direkt überträgt. Bei dem erfindungsgemässen drehgelenkgelagerten Piezooszillator ist die Hysterese 122 bedeutend kleiner, weil die Auswirkung des Übergangs von Haftreibung zu Gleitreibung auf die Anpresskraft untersetzt wird.

In der Umgebung des Arbeitspunkts 128 sind auf der Abszisse der Bereich des Ringschlags 125 und der Bereich des Abriebs 126 des Friktionselements dargestellt. Der Ringschlag 125 verursacht Umlaufschwankungen der Anpresskraft, und der Abrieb 126 verursacht eine langfristige Reduktion der Anpresskraft.

Figur 2b ist ein Ausschnitt aus Figur 2a und stellt graphisch den Verlauf der Anpresskraft des Piezooszillators im Bereich des Arbeitspunkts dar. Die Anpresskraft variiert innerhalb einer Umdrehung im Rahmen des Ringschlags proportional zur Steifigkeit 131,132 der jeweiligen Konstruktion. Die Steifigkeit 131 der Gleitführung ist gross und die Anpresskraft variiert stark. Das belastet die Lagerung der entsprechenden Achse und verursacht Umlaufschwankungen des Antriebmoments des Piezo-Antriebs. Bei dem drehgelenkgelagerten Piezooszillator ist die Steifigkeit 132 bedeutend kleiner als diejenige des gleitgeführten Piezooszillators. Dadurch ist es bei einem drehgelenkgelagerten Piezooszillator möglich, einen grösseren Ringschlag 125 zuzulassen und gleichzeitig geringe Umlaufschwankungen des Antriebmoments des Piezo-Antriebs zu erreichen. Die Lagerbelastung, die durch asymmetrische Anpresskräfte der beiden (wie in Figur 1c gezeigten) Piezooszillatoren entsteht, ist dementsprechend geringer.

Die Anpresskraft-Änderung 141,142 wird durch den Abrieb des Friktionselements bedingt und ist proportional zur Steigung des vierten Abschnitts 114 der Kennlinien 101,102 der Anpresskraft. Dieser Abschnitt ist bei dem drehgelenkgelagerten Piezooszillator annähernd flach, was zu einer vernachlässigbar kleinen Reduktion der Anpresskraft 142 über den Abrieb führt. Die Reduktion der Anpresskraft 141 bei der Gleitführung ist im Gegensatz dazu deutlich spürbar.

Figur 2c zeigt wiederum denselben Ausschnitt aus Figur 2a und stellt die Anpresskraft-Streuung 161,162 der jeweiligen Konstruktion dar. Durch Abweichungen der geometrischen und physikalischen Parameter des Piezo-Antriebs variiert die Kennlinie 101,102 der Anpresskraft über die Stückzahl der Piezo-Antriebe, was in einer Streuung 161,162 der Anpresskraft resultiert und sich entsprechend in Streuung des Antriebmoments des Piezo-Antriebs auswirkt. Die Anpresskraft-Streuung 162 bei dem drehgelenkgelagerten Antrieb ist durch die untersetzte Wirkung der Drehgelenkreibung kleiner als die Anpresskraft-Streuung 161 der Gleitführung, wo die Reibung der Führung direkte Auswirkung hat.

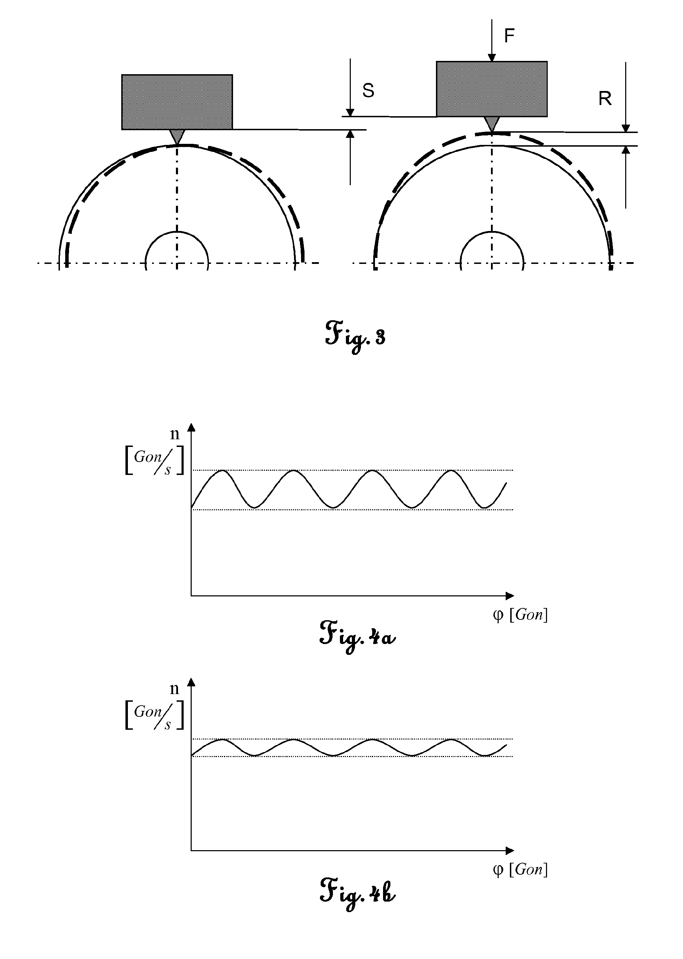

Figur 3 illustriert graphisch die in den Figuren 2a-c verwendeten Begriffe Weg S, Anpresskraft F und Ringschlag R. Der Weg S ist die Verschiebung des Piezooszillators in radialer Richtung mit positiven Vorzeichen weg von der Drehachse des Piezo-Antriebs. Die Anpresskraft F ist die Normalkraft im Kontakt zwischen dem Friktionselement des Piezooszillators und der ringförmigen Laufflächenkomponente. Der Ringschlag R ist der Unterschied zwischen der maximalen und minimalen radialen Position des Schnittpunkts der äusseren Ringoberfläche mit der radialen Koordinatenachse während einer Umdrehung.

Die Figuren 4a und 4b stellen schematisch den Verlauf der Drehgeschwindigkeit über den Winkel eines aus dem Stand der Technik bekannten Piezo-Antriebs und eines erfindungsgemässen Piezo-Antriebs mit drehgelenkgelagertem Piezooszillator dar. Die Ausschläge der Kurven entsprechen den Schwankungen der Geschwindigkeit, die periodisch in jeder Umdrehung auftreten. In Figur 4a ist der Verlauf der Drehgeschwindigkeit über den Winkel eines aus dem Stand der Technik bekannten Piezo-Antriebs mit einem Gleitlager dargestellt. In Figur 4b ist der Verlauf der Drehgeschwindigkeit über den Winkel eines Piezo-Antriebs mit drehgelenkgelagertem Piezooszillator dargestellt. Die Schwankungen der Geschwindigkeit, die periodisch in jeder Umdrehung auftreten, sind bedeutend kleiner als diejenigen des aus dem Stand der Technik bekannten Piezo-Antriebs.

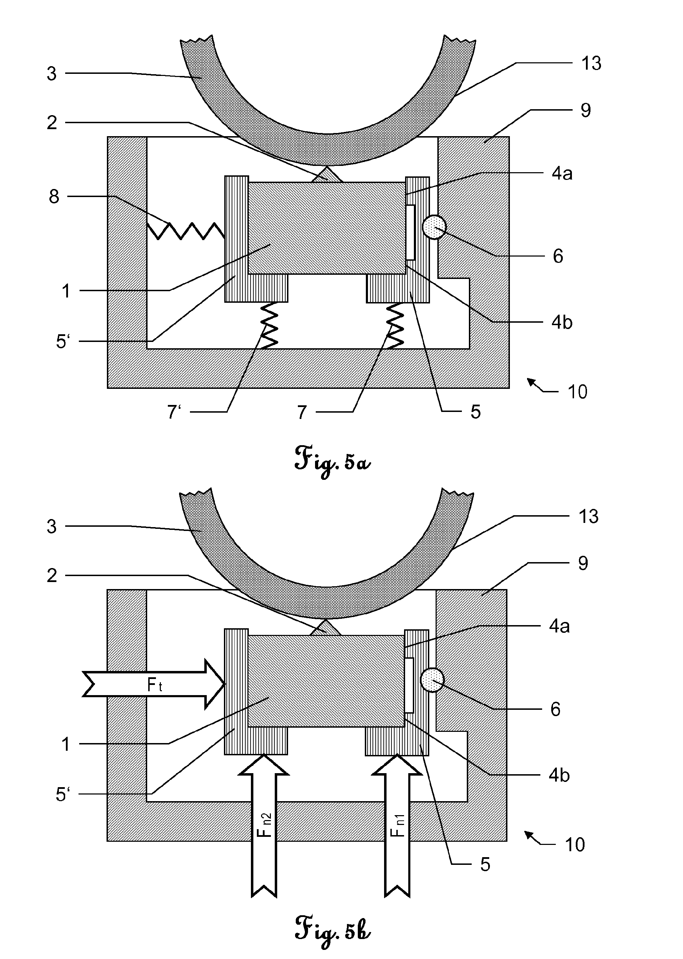

Die Figuren 5a bis 10 zeigen schematisch verschiedene beispielhafte Ausführungsformen des erfindungsgemässen Piezo-Antriebs. Dargestellt ist jeweils eine Laufflächenkomponente 3 in Form eines Ringes, an dessen Lauffläche 13 ein Piezomotor 10 bereitgestellt ist.

Figur 5a zeigt eine erste Ausführungsform eines erfindungsgemässen Piezo-Antriebs, ausgestattet mit einem drehgelenkgelagerten Piezooszillator mit zwei Halteelementen 5,5' und einem Drehgelenk in Gleitlagerausführung mit einem Stift 6. Der Piezooszillator besteht aus einer piezokeramischen Platte 1 und einem Friktionselement 2, die fest miteinander verbunden sind. Das Friktionselement 2 dient als bewegungsübertragendes Kontaktelement zum Ring 3. Die piezokeramische Platte 1 ist spielfrei mit zwei Halteelementen 5,5' verbunden. Ein zylindrisch geformter Stift 6 bildet zusammen mit dem Gehäuse 9 und dem ersten Halteelement 5 ein Drehgelenk vom Gleitlager-Typ. Der Piezooszillator kann somit zusammen mit beiden Halteelementen 5,5' um die Achse des Stiftes 6 rotieren. Der Piezooszillator kontaktiert das Halteelement 5 an den Auflageflächen 4a und 4b. Diese sind so dimensioniert, dass die Kontaktspannungen immer einen elastischen Kontakt gewährleisten. Der Stift 6 befindet sich zwischen beiden Auflageflächen 4a,4b möglichst nahe am Friktionselement 2. Der Piezooszillator wird durch mindestens eine Anpressfeder 7,7' am Ring 3 angepresst, wodurch die oben beschriebene Anpresskraft entsteht. Eine seitliche Kraftschlussfeder 8 gewährleistet den Kraftschluss im Drehgelenk. Die mindestens eine Anpressfeder 7,7' und die seitliche Kraftschlussfeder 8 können auch in einem einzigen Federelement (Anpress-Kraftschluss-Federelement) mit entsprechender Richtung und Steifigkeit realisiert werden. Die Auslegung der Anpressfedern 7,7' und der Kraftschlussfeder 8 stellt die statische Bestimmtheit des Piezooszillators sicher, indem zwischen den Halteelementen 5,5' und der piezokeramischen Platte 1 keine relativen Bewegungen möglich sind. Der Piezooszillator mit den Halteelementen 5,5' verhält sich wie ein starrer Körper. Zusätzlich ist der Kontakt zwischen dem Stift 6 und dem Halteelement 5 und zwischen dem Stift 6 und dem Gehäuse 9 ununterbrochen. Innerhalb einer Umdrehung vollführt der Piezooszillator zusammen mit den Halteelementen 5,5' eine Drehbewegung um die Achse des Drehgelenks, wobei die Anpresskraft des Piezooszillators sich gemäss der in Figur 2a dargestellten Kennlinie 102 verhält. Die Halteelemente 5 und 5' sind aus einem temperaturbeständigen Kunststoff hergestellt, der insbesondere eine Glas-Übergangstemperatur von über 150°C hat und gleitmodifiziert ist.

Figur 5b stellt die von den Federn der ersten Ausführungsform des Piezo-Antriebs erzeugten Kräfte dar. Die beiden Anpressfedern 7,7' erzeugen jeweils Radialkräfte Fn1 und Fn2, die gemeinsam eine Radialkraft Fn ergeben, die so ausgelegt ist, dass der Piezooszillator seinen maximalen Wirkungsgrad erreicht. Die seitliche Kraftschlussfeder 8 erzeugt eine Tangentialkraft Ft, die so ausgelegt ist, dass der Piezomotor eine Auflösung in Tangentialrichtung von 100 nm während seiner Bewegung zulässt.

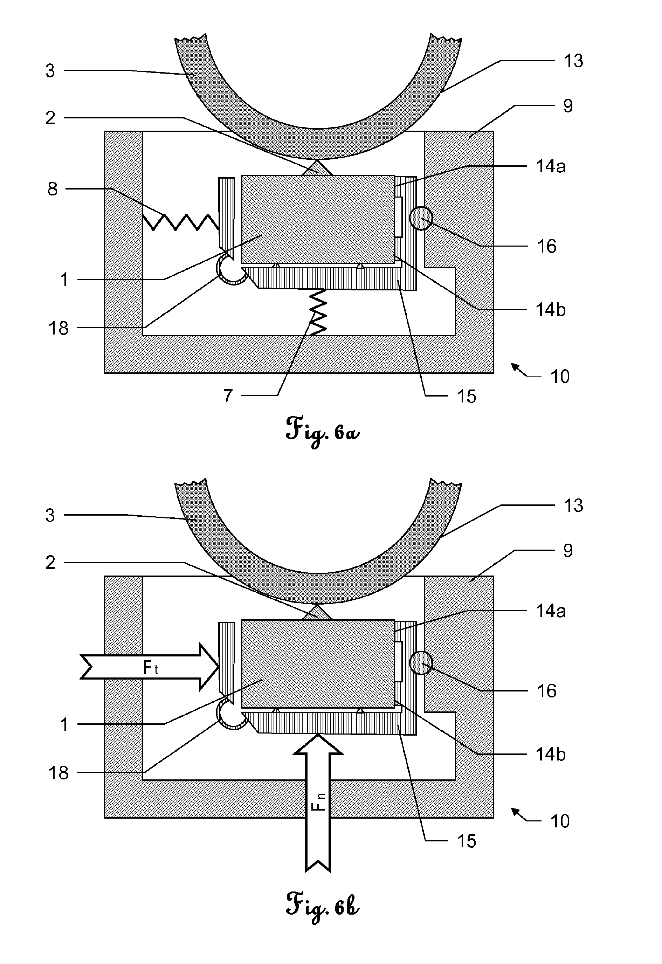

Figur 6a zeigt eine zweite Ausführungsform eines erfindungsgemässen Piezo-Antriebs, ausgestattet mit einem drehgelenkgelagerten Piezooszillator mit einem Halteelement 15 und einem Drehgelenk in Gleitlagerausführung mit einer Kugel 16. Der Piezooszillator umfasst eine piezokeramische Platte 1 und ein Friktionselement 2, die fest miteinander verbunden sind. Das Halteelement 15 hat ein Filmgelenk 18 und ist so gestaltet, dass es im gefalteten Zustand die piezokeramische Platte 1 von drei Seiten umschliessen kann. Die piezokeramische Platte 1 ist spielfrei im gefalteten Halteelement 15 montiert. Eine Kugel 6 bildet zusammen mit dem Gehäuse 9 und dem Halteelement 15 ein Drehgelenk vom Gleitlager-Typ. Der Piezooszillator kontaktiert das Halteelement 15 an den Auflageflächen 14a und 14b. Diese sind so dimensioniert, dass die Kontaktspannungen immer einen elastischen Kontakt gewährleisten. Die Kugel 16 befindet sich zwischen beiden Auflageflächen 14a,14b und vorzugsweise möglichst nahe am Friktionselement 2. Durch die monolithische Konstruktion des Halteelements 15 ist es möglich, nur eine Anpressfeder 7 zu verwenden, die zur Erzeugung der Anpresskraft dient. Die seitliche Kraftschlussfeder 8 gewährleistet den Kraftschluss im Drehgelenk, das aus der Kugel 16, dem Gehäuse 9 und dem Halteelement 15 gebildet wird. Die Bedingungen für die statische Bestimmtheit des Piezooszillators sind keine relative Bewegung zwischen dem Piezooszillator und dem Halteelement, sowie permanenter Kontakt sowohl zwischen dem Gehäuse 9 und der Kugel 16 als auch zwischen der Kugel 16 und dem Halteelement 15. Die statische Bestimmtheit des Systems wird durch die Dimensionierung der Federn 7 und 8 gewährleistet. Das Halteelement 15 ist aus einem temperaturbeständigen Kunststoff hergestellt, der insbesondere eine Glas-Übergangstemperatur Tg > 150°C hat und gleitmodifiziert ist.

Figur 6b stellt die von den Federn der zweiten Ausführungsform des Piezo-Antriebs erzeugten Kräfte dar. Die Anpressfeder 7 erzeugt eine Radialkraft Fn. Die Kraft Fn ist vorzugsweise so ausgelegt, dass der Piezooszillator seinen maximalen Wirkungsgrad erreicht. Die Tangentialkraft Ft der Kraftschlussfeder 8 ist so ausgelegt, dass der Piezooszillator während seiner Bewegung eine Auflösung in Tangentialrichtung von 100nm zulässt.

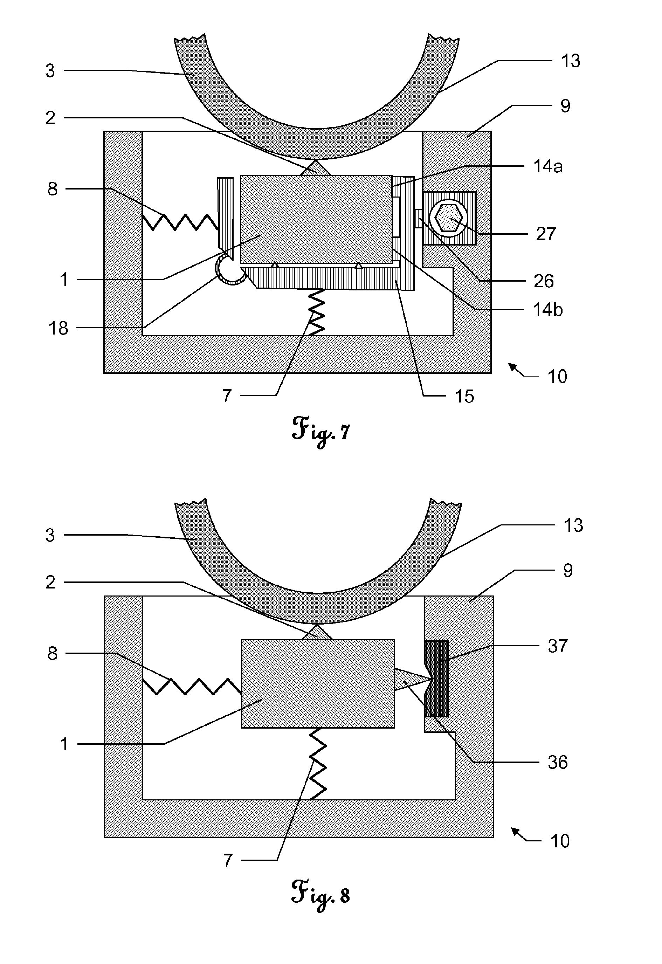

Figur 7 zeigt eine dritte Ausführungsform eines erfindungsgemässen Piezo-Antriebs, ausgestattet mit einem drehgelenkgelagerten Piezooszillator mit einem Halteelement 15 und einem Drehgelenk in Festkörpergelenk-Ausführung. Der Piezooszillator umfasst eine piezokeramische Platte 1 und ein Friktionselement 2, die fest miteinander verbunden sind. Das Halteelement 15 hat ein Filmgelenk 18 und ist so gestaltet, dass es im gefalteten Zustand den Piezooszillator von drei Seiten umschliessen kann. Das Halteelement hat ein Festkörpergelenk 26, um das die Drehbewegung des Piezooszillators stattfindet. Das Halteelement 15 ist mit einer Schraube 27 mit dem Gehäuse 9 fest verbunden. Der Piezooszillator ist spielfrei im Halteelement 15 montiert. Der Piezooszillator kontaktiert das Halteelement 15 an den Auflageflächen 14a,14b. Diese sind so dimensioniert, dass die Kontaktspannungen immer einen elastischen Kontakt gewährleisten. Die Anpressfeder 7 erzeugt die Anpresskraft des Piezooszillators am Ring 3. Die Anpressfeder 7 erzeugt eine Radialkraft Fn. Die Kraft Fn ist vorzugsweise so ausgelegt, dass der Piezooszillator seinen maximalen Wirkungsgrad erreicht. Die seitliche Kraftschlussfeder 8 erzeugt eine Tangentialkraft Ft, die so ausgelegt ist, dass der Piezooszillator während seiner Bewegung eine Auflösung in Tangentialrichtung von 100nm zulässt.

Figur 8 zeigt eine vierte Ausführungsform eines erfindungsgemässen Piezo-Antriebs, ausgestattet mit einem drehgelenkgelagerten Piezooszillator mit einem Drehgelenk in Prismengelenk-Ausführung. Der Piezooszillator umfasst eine piezoelektrische Platte 1, ein Friktionselement 2 und ein Prismenlager 36. Das Friktionselement 2 und das Prismenlager 36 sind fest mit der piezoelektrischen Platte 1 verbunden. Das Prismenlager 36 kontaktiert ein Prisma 37, das mit dem Gehäuse 9 fest verbunden ist. Das Prismenlager 36 und das Prisma 37 sind aus harter Keramik hergestellt, und das Prismenlager ist möglichst nahe am Friktionselement 2 in radialer Richtung an der piezoelektrischen Platte 1 plaziert. Die Anpressfeder 7 drückt den Piezooszillator an die Lauffläche 13 an und erzeugt so die Anpresskraft des Piezo-Antriebs. Sie erzeugt eine Radialkraft Fn, die vorzugsweise so ausgelegt ist, dass der Piezooszillator seinen maximalen Wirkungsgrad erreicht. Die Kraftschlussfeder 8 erzeugt den Kraftschluss im Prismenlager 36. Sie erzeugt eine Tangentialkraft Ft, die so ausgelegt ist, dass der Piezomotor eine Auflösung im Tangentialbereich von 100nm während seiner Bewegung zulässt.

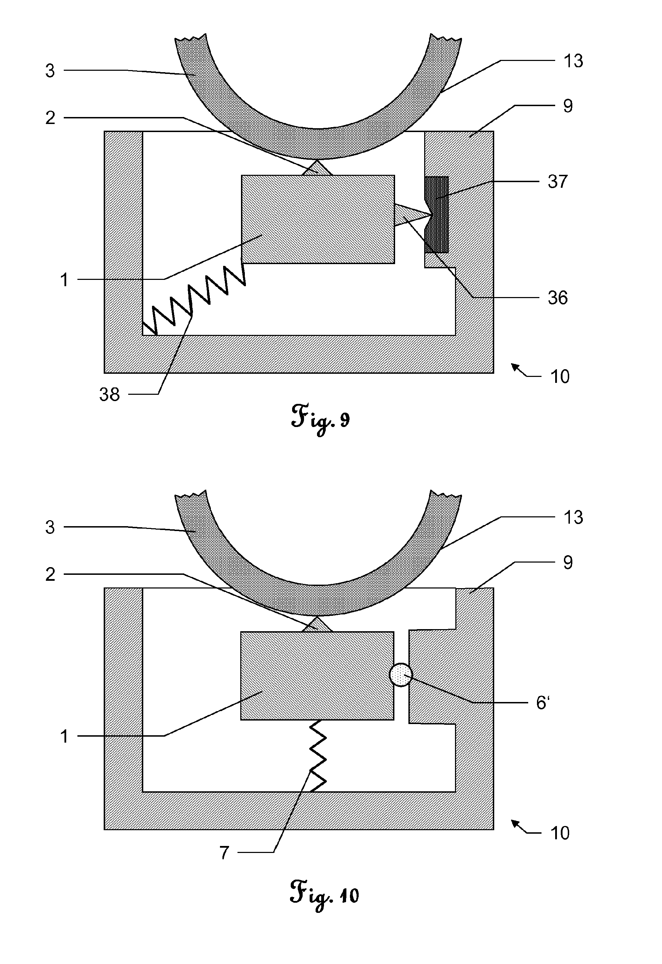

Wie in Figur 9 - am Beispiel der vierten Ausführungsform - dargestellt, kann die Wirkung der Anpressfeder 7 und der Kraftschlussfeder 8 auch durch eine einzige Feder mit entsprechender Richtung und Steifigkeit erzielt werden. Die Bedingung für die statische Bestimmtheit des Systems ist ein permanenter Kontakt im Prismenlager. Dieser kann entweder durch zwei Federn oder alternativ durch ein Anpress-Kraftschluss-Federelement 38 mit einer vektoriellen Summenausrichtung gewährleistet werden.

In Figur 10 ist eine weitere Ausführungsform eines erfindungsgemässen Piezo-Antriebs dargestellt. Auch diese Ausführungsform weist mit dem Anpressfederelement 7 nur ein einziges Federelement auf. Eine Kraftschlussfeder ist hier nicht vorgesehen, da ein Drehgelenk, hier dargestellt als Wälzlager 6', mit einer formschlüssigen Verbindung vorgesehen ist, sodass für eine statische Bestimmtheit kein Kraftschluss nötig wird.

Es versteht sich, dass diese dargestellten Figuren nur mögliche Ausführungsbeispiele schematisch darstellen. Die verschiedenen Ansätze können ebenso miteinander sowie mit Verfahren und Geräten des Stands der Technik kombiniert werden.

## Patentansprüche

1. Piezo-Antrieb zur Verwendung in einem Messgerät (11), insbesondere einem geodätischen oder industriellen Vermessungsgerät, mit wenigstens einem piezoelektrischen Antriebselement (10) und einer Laufflächenkomponente (3) mit einer Lauffläche (13), wobei das piezoelektrische Antriebselement (10) wenigstens aufweist
• einen Piezooszillator mit einem Friktionselement (2) zur Kontaktierung der Lauffläche (13),
• eine Aufnahme (9) und
• eine Aufhängung zur Lagerung des Piezooszillators an der Aufnahme (9) mit mindestens einem eine Rückstellkraft bereitstellenden Anpresselement, **dadurch gekennzeichnet, dass**
die Aufhängung eine Gelenkeinheit aufweist, die dazu ausgestaltet ist, eine Schwenkbewegung des Piezooszillators zu ermöglichen.

2. Piezo-Antrieb nach Anspruch 1,
**dadurch gekennzeichnet, dass**
die Gelenkeinheit
• einen, insbesondere zylindrischen, Stift (6) oder eine Kugel (16) aufweist, und/oder
• als ein Walzenlager, ein Kugellager, ein Festkörpergelenk (26) oder ein Prismenlager (36) ausgebildet ist.

3. Piezo-Antrieb nach Anspruch 1 oder Anspruch 2,
**dadurch gekennzeichnet, dass**
zumindest Teile der Gelenkeinheit ausgestaltet sind als integraler Bestandteil
• der Aufnahme (9) und/oder
• des Piezooszillators.

4. Piezo-Antrieb nach einem der vorangegangenen Ansprüche, **dadurch gekennzeichnet, dass**
das Anpresselement
• einerseits an der Aufnahme (9) und andererseits am Piezooszillator befestigt ist und/oder
• eine Radialkraft (Fn) auf den Piezooszillator ausübt, durch die das Friktionselement (2) gegen die Lauffläche (13) gedrückt wird.

5. Piezo-Antrieb nach einem der vorangegangenen Ansprüche, **dadurch gekennzeichnet, dass**
das Anpresselement als ein Anpressfederelement (7, 7') ausgestaltet ist, das eine Radialkraft (Fn) auf den Piezooszillator ausübt, durch die das
Friktionselement (2) gegen die Lauffläche (13) gedrückt wird, insbesondere wobei zusätzlich ein zweites Anpressfederelement (7') vorgesehen ist, das gemeinsam mit dem ersten Anpressfederelement (7) eine Radialkraft (Fn) auf den Piezooszillator ausübt, durch die das Friktionselement (2) gegen die Lauffläche (13) gedrückt wird.

6. Piezo-Antrieb nach einem der Ansprüche 1 bis 4,
**dadurch gekennzeichnet, dass**
das Anpresselement als ein Anpress-Kraftschluss-Federelement (38) ausgestaltet ist, das eine Radialkraft (Fn) auf den Piezooszillator ausübt, durch die das Friktionselement (2) gegen die Lauffläche (13) gedrückt wird, und eine Tangentialkraft (Ft) auf den Piezooszillator ausübt, durch die in der Gelenkeinheit ein Kraftschluss erzeugt wird.

7. Piezo-Antrieb nach einem der Ansprüche 1 bis 5,
**dadurch gekennzeichnet, dass**
• die Gelenkeinheit derart ausgestaltet ist, dass sie eine formschlüssige Verbindung aufweist, oder
• ein Kraftschlusselement eine Tangentialkraft (Ft) auf den Piezooszillator ausübt, durch die in der Gelenkeinheit ein Kraftschluss erzeugt wird, insbesondere wobei
• das Kraftschlusselement als ein
Kraftschlussfederelement (8) ausgebildet ist, und/oder
• einerseits an der Aufnahme (9) und andererseits am Piezooszillator befestigt ist.

8. Piezo-Antrieb nach einem der vorangegangenen Ansprüche, **dadurch gekennzeichnet, dass**
• der Piezooszillator in der Aufnahme (9) in radialer und tangentialer Richtung statisch bestimmt aufgehängt ist, und/oder
• die Aufnahme (9) in Form eines Rahmens oder Gehäuses ausgebildet ist, und/oder den Piezooszillator auf mindestens drei Seiten umfängt.

9. Piezo-Antrieb nach einem der vorangegangenen Ansprüche, **dadurch gekennzeichnet, dass**
• die Laufflächenkomponente (3) und/oder die Lauffläche (13) aus Keramik bestehen,
• die Laufflächenkomponente (3) in Form eines Ringes, eines Zylinders oder einer im wesentlichen kreisrunden Scheibe ausgebildet ist, und/oder
• die Lauffläche (13) zylindermantelförmig ist.

10. Piezo-Antrieb nach einem der vorangegangenen Ansprüche, **dadurch gekennzeichnet, dass**
der Piezooszillator ein Halteelement (5, 15) aufweist, mittels dessen er an der Aufhängung gelagert ist, insbesondere wobei
• der Piezooszillator in dem Halteelement (5, 15) spielfrei montiert ist, und/oder
• das Halteelement (5, 15) aus einem temperaturbeständigen Kunststoff besteht, der insbesondere eine Glas-Übergangstemperatur von über 150°C hat und/oder gleitmodifiziert ist.

11. Messgerät (11), insbesondere geodätisches oder industrielles Vermessungsgerät, mit wenigstens zwei relativ zueinander beweglichen
Komponenten (20, 21, 22),
**dadurch gekennzeichnet, dass**
wenigstens eine erste Komponente relativ zu einer weiteren Komponente vermittels eines Piezo-Antriebes nach einem der Ansprüche 1 bis 10 ausrichtbar ist.

12. Messgerät (11) nach Anspruch 11,
**dadurch gekennzeichnet, dass**
• wenigstens eine erste Komponente relativ zu einer weiteren Komponente vermittels zweier piezoelektrischer Antriebselemente (10, 10') ausrichtbar ist, und/oder
• wenigstens eine erste und eine zweite Komponente relativ zu jeweils einer weiteren Komponente vermittels jeweils mindestens eines piezoelektrischen Antriebselementes (10, 10a) ausrichtbar sind.

13. Messgerät (11) nach Anspruch 11,
**gekennzeichnet durch**
wenigstens eine Basis (20) zur Positionierung des Messgerätes (4) und eine Messkomponente (22) zur Ausrichtung eines optischen Strahlgangs auf ein Ziel, wobei
• die Messkomponente (22) in einer gegenüber der Basis (20) bewegbaren, insbesondere um eine Stehachse drehbaren, Ausrichtkomponente (21) gelagert und gegenüber der Basis (20) bewegbar ist, insbesondere um eine Kippachse drehbar, und
• ein optischer Strahlgang **durch** wenigstens ein piezoelektrisches Antriebselement (10, 10', 10a) modifizierbar ist.

14. Messgerät (11) nach Anspruch 13,
**dadurch gekennzeichnet, dass**
• mindestens eine Achse des Vermessungsgerätes (11) vermittels zweier piezoelektrischer Antriebselemente (10, 10') rotatorisch antreibbar ist, und/oder
• mindestens zwei Achsen des Vermessungsgerätes (11) vermittels jeweils mindestens eines piezoelektrischen Antriebselementes (10, 10a) rotatorisch antreibbar sind.

15. Antriebsverfahren für eine Achse (A) mit einem piezoelektrischen Antriebselement (10), wobei
• die Achse (A) eine Laufflächenkomponente (3) mit einer Lauffläche (13) aufweist, und
• das piezoelektrische Antriebselement (10) einen Piezooszillator mit einem Friktionselement (2) aufweist,
mit einem Kontaktieren der Lauffläche (13) durch das Friktionselement (2) und einem Übertragen von Bewegungsimpulsen vom Friktionselement (2) auf die Laufflächenkomponente (13),
**gekennzeichnet durch**
• ein Ausüben einer radial auf den Piezooszillator wirkenden Kraft (Fn) zum Anpressen des Friktionselementes (2) an die Lauffläche (13),
• ein Ausüben einer tangential auf den Piezooszillator wirkenden Kraft (Ft), und
• ein schwenkbares Lagern des Piezooszillators zum Erzeugen einer Beweglichkeit des Friktionselementes (2) relativ zur Lauffläche (13), wobei die tangential auf den Piezooszillator wirkende Kraft (Ft) im Lager einen Kraftschluss bewirkt.
